# EUROPEAN PATENT APPLICATION

(11) **EP 1 470 847 A1**
(43) Date of publication of application: **27.10.2004**
(21) Application number: 04252185.6
(22) Date of filing: 14.04.2004
(51) Int. Cl.: B01D 27/10, F16K 15/14

(54) **Filter with check valve and assembling method thereof**

(30) Priority: 25.04.2003 US 423764
(71) Applicant: Arvin Technologies, Inc., Troy, MI 48084 (US)
(72) Inventor: Launer, Brian R., Fayetteville, NC 28314 (US); Cline, L. Steven, Fayetteville, NC 28306 (US); Wright, Allen B., Hope Mills, NC 28348 (US)
(74) Representative: Croston, David

(57) **Abstract**

A filter apparatus (10) comprises a housing (18), a filter element (14), and an anti-drainback valve (24). The anti-drainback valve (24) comprises a support member (92) and a valve member (30) coupled to the support member (92) for movement between a normally closed position blocking a flow of fluid out of the housing through an inlet formed in the housing and an opened position allowing a flow of fluid through the inlet into the housing.

## Description

### BACKGROUND

The present disclosure relates to filter apparatus, and particularly to filter apparatus for filtering fluids for an engine.

Filter apparatus are used onboard vehicles and in other apparatus containing transport systems to remove unwanted solids or other contaminants from fluids. Some filter apparatus are provided to clean oil used in vehicle engines.

### SUMMARY

A filter apparatus comprises a housing, a filter element, and an anti-drainback valve. The anti-drainback valve comprises a support member and a valve member coupled to the support member for movement between a normally closed position blocking a flow of fluid out of the housing through an inlet formed in the housing and an opened position allowing a flow of fluid through the inlet into the housing. The valve member is, for example, molded onto the support member.

According to an aspect of the disclosure, a method of assembling the filter apparatus comprises the steps of molding the valve member onto the support member and advancing the valve member molded onto the support member into the housing for movement of the valve member between the closed and opened positions.

Additional features and advantages of the present disclosure will become apparent to those skilled in the art upon consideration of the following detailed description exemplifying the best mode as presently perceived.

### BRIEF DESCRIPTION OF THE DRAWINGS

The detailed description particularly refers to the accompanying figures in which:
FIG. 1 is a diagrammatic view of an engine with a filter apparatus mounted thereto to filter an engine fluid such as oil;
FIG. 2 is a partially sectional view of the filter apparatus showing the filter apparatus including an anti-drainback valve in a normally closed position blocking a flow of fluid out of a housing of the filter apparatus through a housing inlet formed in the housing;
FIG. 3 is an exploded perspective view of the filter apparatus;
FIG. 4 is an enlarged sectional view of a portion of the filter apparatus of Fig. 2 showing the filter apparatus in a filtration mode of operation in which the anti-drainback valve is in an opened position allowing a flow of fluid from the housing inlet into the housing and a bypass valve is in its normally closed position so that fluid flows through a filter element;
FIG. 5 is a sectional view similar to FIG. 4 showing the filter apparatus in a bypass mode of operation in which the anti-drainback and bypass valves are in their opened positions to allow fluid to flow from the housing inlet into the housing and to bypass the filter element when, for example, the filter element becomes clogged with contaminant material;
FIG. 6 is a perspective view of the anti-drainback valve, with portions broken away, showing an annular, radially outer valve member molded onto an annular, radially inner support member;
FIG. 7 is a sectional view of the support member;
FIG. 8 is a fragmentary top plan view of the support member as viewed in a direction suggested by lines 8-8 of FIG. 7;
FIG. 9 is a sectional view showing the support member positioned in a first mold and a second mold being moved toward the first mold to enclose the support member;
FIG. 10 is a sectional view showing the support member located in a mold cavity defined by the first and second molds;
FIG. 11 is a sectional view showing material for the valve member being introduced into the mold cavity to mold the valve member onto the support member;
FIG. 12 is a sectional view showing a second anti-drainback valve;
FIG. 13 is a sectional view showing a third anti-drainback valve;
FIG. 14 is a sectional view showing a fourth anti-drainback valve;
FIG. 15 is a sectional view showing a fifth anti-drainback valve; and
FIG. 16 is a sectional view showing a sixth anti-drainback valve.

### DETAILED DESCRIPTION OF THE DRAWINGS

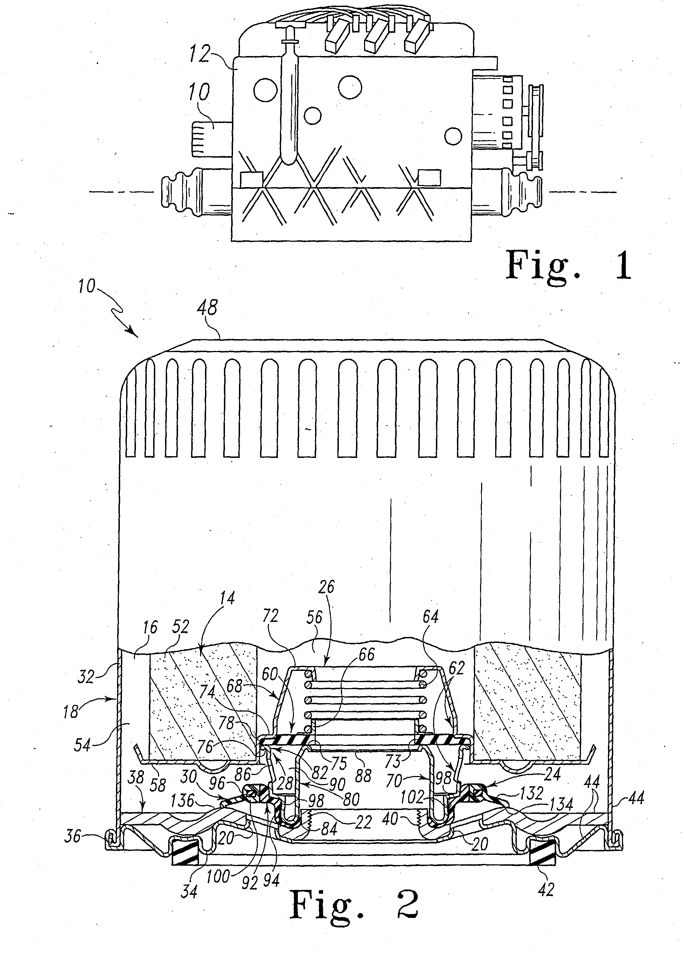

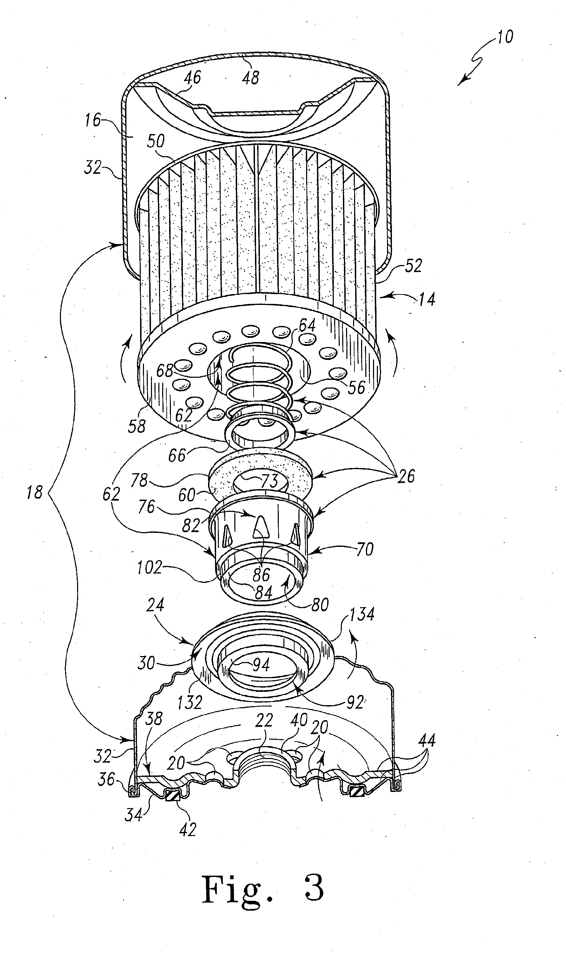

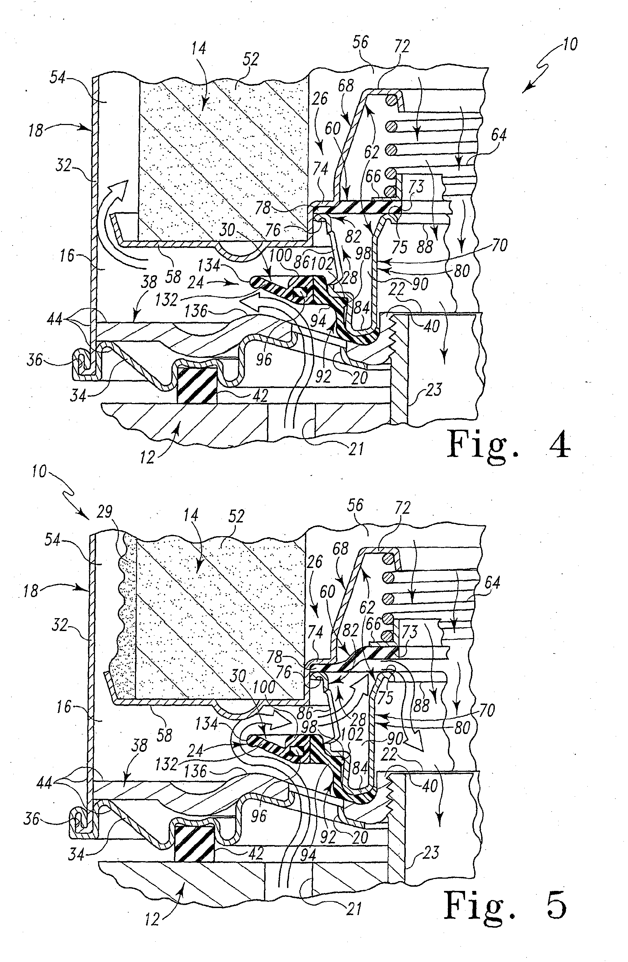

A filter apparatus 10 is configured to be coupled to the block of an engine 12 to filter contaminant material from fluid, such as oil, flowing through engine 12, as illustrated, for example, in FIG. 1. Apparatus 10 includes a filter element 14 positioned in an interior region 16 of a housing 18 to filter contaminant material as fluid flows from one or more engine outlets 21 (see FIGS. 4-5) through a plurality of circumferentially spaced housing inlets 20 (see FIGS. 2-5) and filter element 14 to a centrally located housing outlet 22 mounted on an engine inlet 23 (see FIGS. 4-5).

Apparatus 10 includes a normally closed annular anti-drainback valve 24 (see FIGS. 2-6) and a normally closed annular bypass valve 26 (see FIGS. 2-5), as illustrated, for example, in FIG. 2. Valves 24, 26 are positioned in interior region 16. Anti-drainback valve 24 normally closes housing inlets 20 to block fluid from flowing out of interior region 16 through inlets 20 when, for example, engine 12 is not operating so that there is at least some fluid in interior region 16 to deliver to engine 12 when engine 12 is started next. Bypass valve 26 is positioned in a bypass passageway 28 provided between filter element 14 and housing 18 to normally close bypass passageway 28 so that fluid flows through filter element 14 during a filtering mode of operation of apparatus 10 (see FIG. 4).

A bypass mode of operation of apparatus 10 is initiated when bypass valve 26 opens bypass passageway 28 in response to pressurized fluid in interior region 14. During the bypass mode of operation, fluid flows from inlets 20 through passageway 28 to outlet 22 so as to bypass filter element 14. The bypass mode of operation occurs, for example, when filter element 14 has become clogged with contaminant material 29 (see FIG. 5) and/or when the fluid is relatively thick such as during a cold start-up of engine 12. Anti-drainback valve 24 is constructed so as to prevent a flexible annular valve member 30 (see FIGS. 2-6) thereof from becoming stuck in one or more circumferentially spaced bypass inlets 86 formed in bypass valve 26 and blocking a flow of fluid through bypass passageway 28 during the bypass mode of apparatus 10, as discussed in more detail below.

Housing 18 includes a case 32 and an annular base plate 34 crimped to case 32 at an interface 36, as illustrated, for example, in FIGS. 2-5. An annular tapping plate 38 of housing 18 engages an axially outer surface of base plate 34 and cooperates with base plate 34 to provide housing inlets 20. An inner annular flange 40 of tapping plate 38 provides housing outlet 22 and is formed to include threads to couple to corresponding threads formed on engine inlet 23. A gasket 42 is captured in an annular groove formed in base plate 34 and configured to engage engine 12 to provide a sealed connection between apparatus 10 and engine 12. Case 32, base plate 34, and tapping plate 38 cooperate to provide interior region 16. Base plate 34, tapping plate 38, and a corresponding portion of case 32 surrounding plates 34, 38 cooperate to provide a housing axially inner end portion 44 of housing 18.

An annular leaf spring 46 is positioned in interior region 16, as illustrated, for example, in FIG. 3. Spring 46 engages a housing axially outer end portion 48 provided by case 32 and a filter axially outer end portion or end cap 50 of filter element 14 to press filter element 14 toward plates 34, 38 onto components of bypass valve 26.

Filter element 14 includes pleated filter media 52, as illustrated, for example, in FIGS. 2-5, to filter fluid flowing radially inwardly from a radially outer unfiltered fluid chamber 54 through filter media 52 to a central filtered fluid chamber 56. Filter media 52 is coupled to end cap 50 and a filter axially inner end portion or end cap 58 of element 14. Bypass passageway 28 is provided between housing axially inner end portion 44 and filter axially inner end portion.

Bypass valve 26 includes a flexible annular bypass valve member 60, a bypass valve mount 62, a coil spring 64, and an annular interface 66 between bypass valve member 60 and spring 64, as illustrated, for example, in FIGS. 2-5. Bypass valve member 60 is coupled to bypass valve mount 62 for movement of bypass valve member 60 relative to housing 18 and bypass valve mount 62 between a normally closed position closing bypass passageway 28 to block fluid from flowing from housing inlets 20 through bypass passageway 28 to housing outlet 18 and an opened position opening bypass passageway 28 to allow fluid to flow from housing inlets 20 through bypass passageway 28 to housing outlet 22 so that fluid can bypass filter element 14. Spring 64 via interface 66 biases bypass valve member 60 to its normally closed position.

Bypass valve mount 62 includes an axially outer member 68 and an axially inner member or bypass conduit 70 that cooperate to hold bypass valve member 60 in bypass passageway 28, as illustrated, for example, in FIGS. 2-5. Outer member 68 is formed monolithically with axially inner end cap 58. Spring 64 presses against an axially outer ledge 72 of member 68 to bias a radially inner portion 73 of bypass valve 78 toward a valve seat 75 illustratively formed as a radially inner curved lip provided by bypass conduit 70. An axially inner ledge 74 cooperates with a radially outer curved lip 76 of bypass conduit 70 to hold a radially outer portion 78 of bypass valve member 60. Lip 76 engages and is surrounded by member 68.

Bypass conduit 70 includes a radially inner sleeve 80, a radially outer sleeve 82 radially surrounding sleeve 80, and an annular axially inner end portion 84 provided by sleeves 80, 82, as illustrated, for example, in FIGS. 2-5. Sleeve 82 includes lip 76 and is formed to include the circumferentially-spaced bypass inlets 86. Sleeve 80 includes valve seat 75 and is formed to include a bypass outlet 88. Sleeves 80, 82 cooperate to provide an annular channel 90 therebetween.

Anti-drainback valve 24 includes annular valve member 30 and an annular support member 92, as illustrated, for example, in FIGS. 2-6. Valve member 30 and support member 92 surround bypass conduit 70. Valve member 30 is molded onto support member 92 for movement of valve member 30 relative to housing 18 between a normally closed position (see FIG. 2) blocking fluid from flowing from interior region 16 through housing inlets 20 and an opened position (see FIGS. 4-5) allowing fluid to flow from housing inlets 20 into interior region 16.

Valve member 30 is made of a flexible first material and support member 92 is made of a second material that is more stiff than the first material. The second material is more stiff than the first material so that support member 92 spaces a radially outer end portion 134 of valve member 30 apart from outer sleeve 82 to prevent valve member 30 from becoming stuck in any of the bypass inlets 86 and blocking fluid from flowing through bypass passageway 28 when pressurized fluid moves valve member 30 to its opened position. The second material is sufficiently malleable so that support member 92 sealingly engages tapping plate 38 and bypass conduit 70. The first material is, for example, a thermoplastic such as silicone. The second material is, for example, a thermoplastic such as a thermoplastic elastomer. The second material is, for example, nylon.

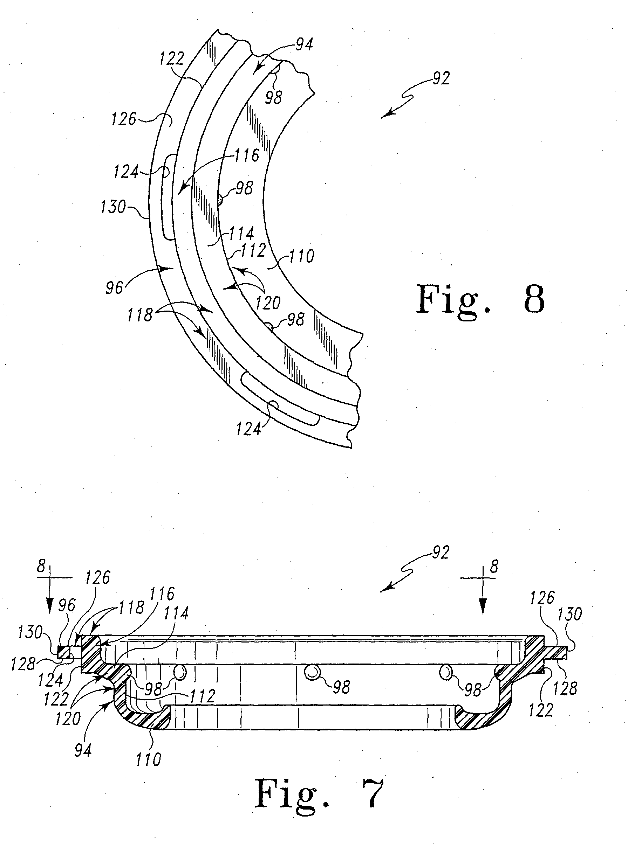

Support member 92 includes an annular base 94, an annular mounting rib 96 coupled to base 94, and a plurality of circumferentially-spaced engagement bumps 98 coupled to base 94, as illustrated, for example, in FIGS. 2 and 4-18. A gripper or radially inner end portion 100 of valve member 30 is molded onto and covers rib 96, as explained in more detail below. Engagement bumps 98 frictionally engage bypass conduit 70 in a circumferential groove 102 formed therein to couple bypass conduit 70 and anti-drainback valve 24 together, as illustrated, for example, in FIGS. 2-5. Base 94, rib 96, and bumps 98 surround bypass conduit 70, as illustrated, for example, in FIGS. 2, 4, and 5.

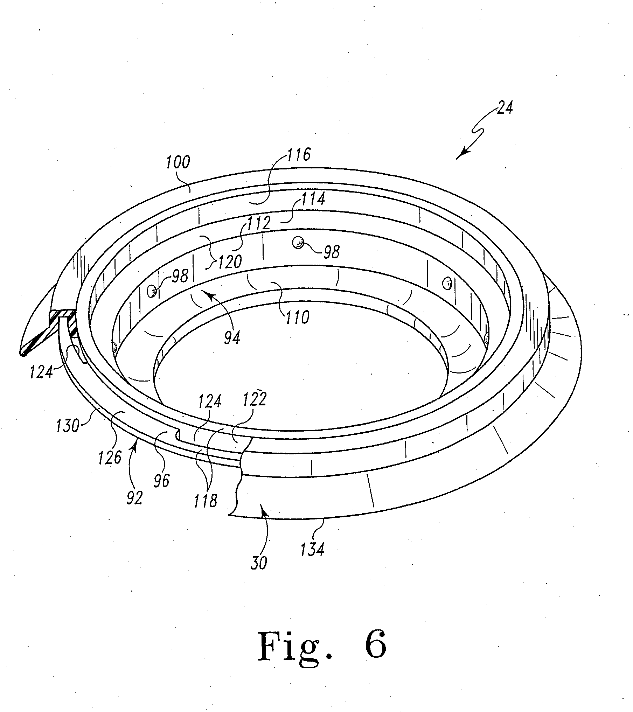

Base 94 includes, in sequence, a first radially-extending portion 110, a first axially-extending portion 112, a second radially-extending portion 114, and a second axially-extending portion 116, as illustrated, for example, in FIGS. 6-7. Portion 110 provides a radially and axially inner end portion of support member 92. Portion 116 and rib 96 cooperate to provide a radially and axially outer end portion 118 of support member 92. Portions 112, 114 cooperate to provide an intermediate portion 120 of support member 92 and base 94. Portion 110 sealingly engages axially inner end portion 84 of bypass conduit 70 and tapping plate 38.

Rib 96 extends radially outwardly from a radially outwardly facing surface 122 of portion 116, as illustrated, for example, in FIGS. 6-8. Rib 96 surrounds base 94 and bypass conduit 70. Rib 96 is formed to include a plurality of circumferentially-spaced slots 124 through which valve end portion 100 extends to couple valve member 30 to support member 92. Rib 96 includes an axially outwardly facing surface 126, an axially inwardly facing surface 128, and a radially outwardly facing surface 130. End portion 100 engages surfaces 122, 126, 128, 130.

Valve member 30 includes an annular web 132 extending radially outwardly from radially inner end portion 100, as illustrated in FIGS. 2, 4, 5, and 11. Web 132 includes a radially outer end portion 134 of valve member 30 which engages a valve seat 136 provided by tapping plate 38 in the closed position of valve member 30. Radially outer end portion 134 disengages valve seat 136 in the opened position of valve member 30.

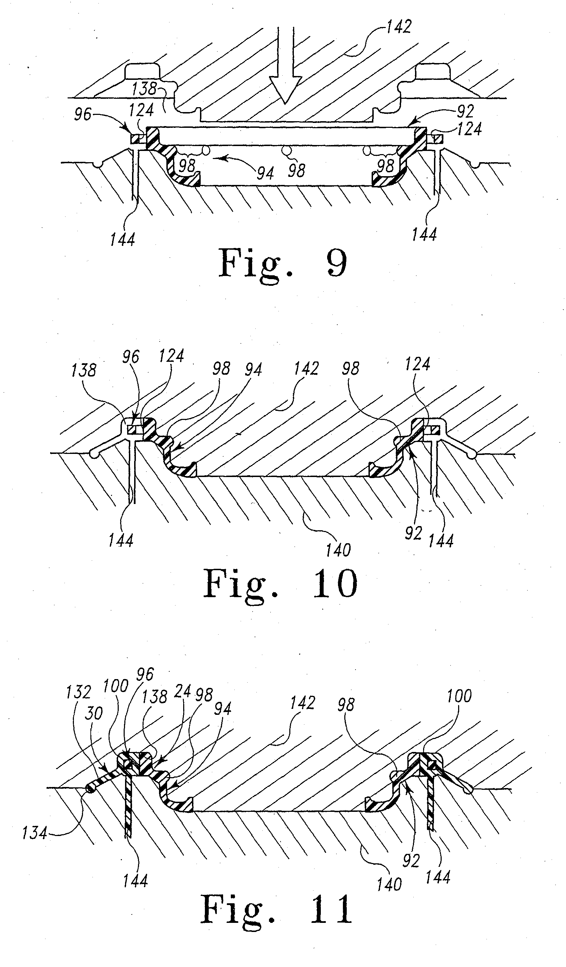

Valve member 30 is molded onto support member 92, as illustrated, for example in FIGS. 9-11. To mold valve member 30 onto support member 92, support member 92 is placed on a first mold 140 (see FIG. 9) and a second mold 142 is advanced toward first mold 140 to capture support member 92 in a mold cavity 138 (see FIG. 9) defined between molds 140, 142. The material for valve member 30 is then injected or otherwise introduced through one or more runners 144 into mold cavity 138 and fills the space within mold cavity 138 unoccupied by support member 92 to provide valve member 30 (see FIG. 11). The material fills slots 124 and covers mounting rib 96 to mold valve member 30 onto mounting rib 96. Support member 92 and valve member 30 molded thereon are then advanced into interior region 16.

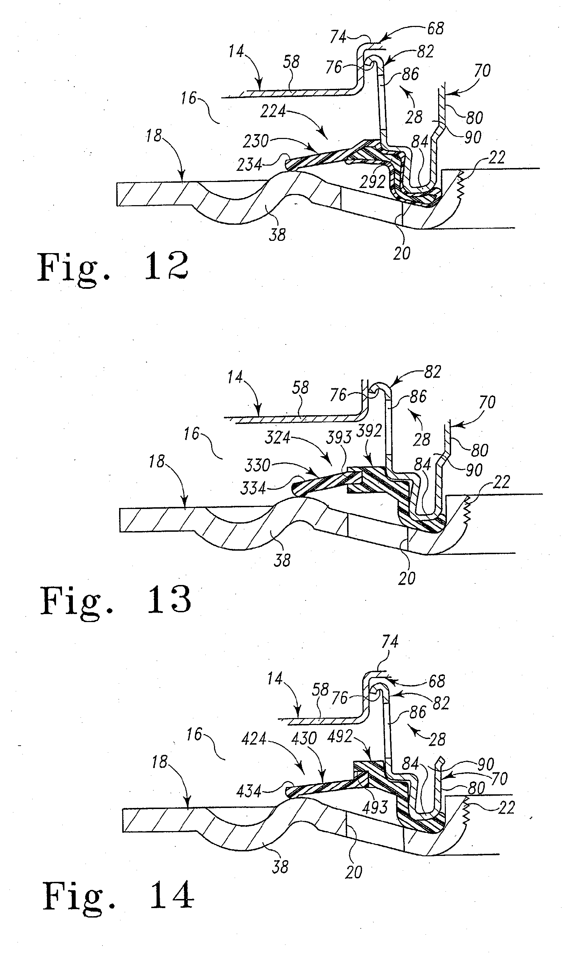

A second anti-drainback valve 224 is illustrated, for example, in FIG. 12. Valve 224 includes an annular flexible valve member 230 and an annular support member 292. Valve member 230 is molded onto support member 292 for movement of valve member 230 relative to housing 18 between a closed position blocking fluid from flowing out of interior region 16 through housing inlets 20 and an opened position allowing fluid to flow through housing inlets 20 into interior region 16.

The material of support member 292 is more stiff than the material of valve member 230 to space a radially outer end portion 234 of valve member 230 apart from outer sleeve 82 to prevent valve member 230 from becoming stuck in any of bypass inlets 86 and blocking fluid from flowing from housing inlets 20 through bypass conduit 70 to housing outlet 22 when valve member 230 and bypass valve 26 are positioned in their opened positions. The material of support member 230 is molded onto support member 292 so as to enclose support member 230. The flexible material of valve member 230 sealingly engages tapping plate 38 and bypass conduit 70.

A third anti-drainback valve 324 is illustrated, for example, in FIG. 13. Valve 324 includes an annular flexible valve member 330 and an annular support member 392. Valve member 330 is molded onto support member 392 for movement of valve member 330 relative to housing 18 between a closed position blocking fluid from flowing out of interior region 16 through housing inlets 20 and an opened position allowing fluid to flow through housing inlets 20 into interior region 16.

The material of support member 392 is more stiff than the material of valve member 330 to space a radially outer end portion 334 of valve member 330 apart from outer sleeve 82 to prevent valve member 330 from becoming stuck in any of bypass inlets 86 and blocking fluid from flowing from housing inlets 20 through bypass conduit 70 to housing outlet 22 when valve member 330 and bypass valve 26 are positioned in their opened positions. The material of support member 330 is molded onto support member 392 in a groove 393 of support member 392.

A fourth anti-drainback valve 424 is illustrated, for example, in FIG. 14. Valve 424 includes an annular flexible valve member 430 and an annular support member 492. Valve member 430 is molded onto support member 492 for movement of valve member 430 relative to housing 18 between a closed position blocking fluid from flowing out of interior region 16 through housing inlets 20 and an opened position allowing fluid to flow through housing inlets 20 into interior region 16.

The material of support member 492 is more stiff than the material of valve member 430 to space a radially outer end portion 434 of valve member 430 apart from outer sleeve 82 to prevent valve member 430 from becoming stuck in any of bypass inlets 86 and blocking fluid from flowing from housing inlets 20 through bypass conduit 70 to housing outlet 22 when valve member 430 and bypass valve 26 are positioned in their opened positions. The material of support member 430 is molded onto support member 492 in a groove 493 of support member 492.

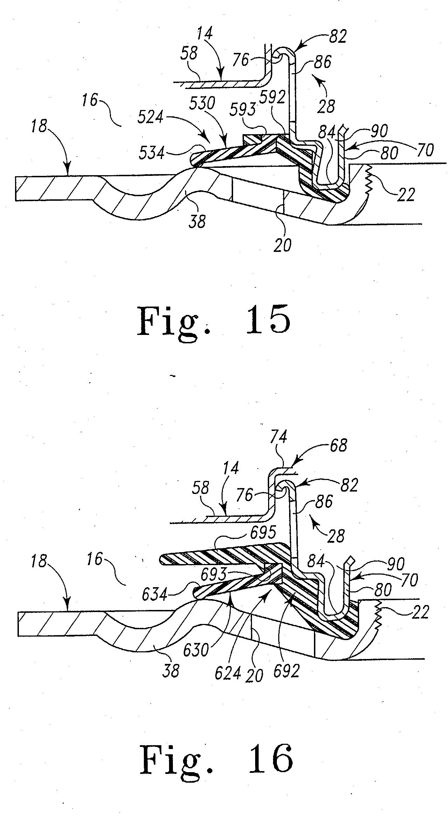

A fifth anti-drainback valve 524 is illustrated, for example, in FIG. 15. Valve 524 includes an annular flexible valve member 530 and an annular support member 592. Valve member 530 is molded onto support member 592 for movement of valve member 530 relative to housing 18 between a closed position blocking fluid from flowing out of interior region 16 through housing inlets 20 and an opened position allowing fluid to flow through housing inlets 20 into interior region 16.

The material of support member 592 is more stiff than the material of valve member 530 to space a radially outer end portion 534 of valve member 530 apart from outer sleeve 82 to prevent valve member 530 from becoming stuck in any of bypass inlets 86 and blocking fluid from flowing from housing inlets 20 through bypass conduit 70 to housing outlet 22 when valve member 530 and bypass valve 26 are positioned in their opened positions. The material of support member 530 is molded onto support member 492 and through a plurality of circumferentially-spaced slots 593 of support member 592.

A sixth anti-drainback valve 624 is illustrated, for example, in FIG. 16. Valve 624 includes an annular flexible valve member 630 and an annular support member 692. Valve member 630 is molded onto support member 692 for movement of valve member 630 relative to housing 18 between a closed position blocking fluid from flowing out of interior region 16 through housing inlets 20 and an opened position allowing fluid to flow through housing inlets 20 into interior region 16. The material of support member 692 is more rigid than the material of valve member 630. The material of support member 630 is molded onto support member 692 in a groove 693 of support member 492.

A travel limiter 695 extends radially outwardly from support member 692 between valve member 630 and filter element 14. Travel limiter 695 is configured for engagement with valve member 630 to limit movement of valve member 630 toward the bypass conduit 70 to prevent valve member 630 from becoming stuck in any of bypass inlets 86 and blocking fluid from flowing from housing inlets 20 through bypass conduit 70 to housing outlet 22 when valve member 630 and bypass valve 26 are positioned in their opened positions.

## Claims

1. A filter apparatus comprising
a housing formed to include an inlet,
a filter element positioned within the housing to filter a flow of fluid,
an anti-drainback valve positioned within the housing and including an annular support member and an annular valve member molded onto the support member for movement between a normally closed position blocking a flow of fluid out of the housing through the inlet and an opened position allowing a flow of fluid through the inlet into the housing.

2. The filter apparatus of claim 1, wherein support member includes an annular mounting rib, and the valve member is coupled to the mounting rib.

3. The filter apparatus of claim 2, wherein the mounting rib is formed to include a plurality of circumferentially spaced slots, and the valve member extends through the slots.

4. The filter apparatus of claim 1, wherein the support member is formed to include an annular groove, and the valve member extends in the groove.

5. The filter apparatus of claim 1, wherein the support member is enclosed by the valve member such that the support member acts as a stiffener for the valve member.

6. The filter apparatus of claim 1, wherein the anti-drainback valve includes a travel limiter extending from the support member for engagement with the valve member to limit movement of the valve member.

7. The filter apparatus of claim 1, wherein the support member and the valve member are made of different materials.

8. The filter apparatus of claim 1, wherein the support member is made of a material more stiff than a material of the valve member.

9. A method of assembling a filter apparatus, the method comprising the steps of
molding an annular valve member onto an annular support member, and
advancing the valve member molded onto the support member into a housing for movement of the valve member between a normally closed position blocking a flow of fluid from the housing through an inlet defined by the housing and an opened position allowing a flow of fluid through the inlet into the housing.

10. The method of claim 9, wherein the support member includes an annular mounting rib, and the molding step includes molding the valve member onto the mounting rib.

11. The method of claim 10, wherein the mounting rib includes a plurality of circumferentially spaced slots, and molding the valve member onto the mounting rib includes extending the valve member through the slots.

12. The method of claim 9, wherein the molding step includes making the valve member out of a material different from a material of which the support member is made.

13. The method of claim 12, wherein the molding step includes making the valve member out of a material that is more flexible than a material of which the support member is made.
